# EUROPÄISCHE PATENTSCHRIFT

(11) **EP 4 127 497 B1**
(45) Veröffentlichungstag und Bekanntmachung des Hinweises auf die Patenterteilung: **17.07.2024**
(21) Anmeldenummer: 21712013.8
(22) Anmeldetag: 17.02.2021
(51) Int. Cl.: F16C 19/18, F16C 33/58, F16C 19/50, B60B 37/10

(54) **RADSATZLAGER FÜR EIN SCHIENENFAHRZEUG UND SCHIENENFAHRZEUG**
WHEELSET BEARING FOR A RAIL VEHICLE, AND RAIL VEHICLE
PALIER D'ESSIEU MONTÉ POUR VÉHICULE FERROVIAIRE, ET VÉHICULE FERROVIAIRE

(30) Priorität: 30.03.2020 DE 102020108770
(43) Veröffentlichungstag der Anmeldung: 08.02.2023
(73) Patentinhaber: Schaeffler Technologies AG & Co. KG, 91074 Herzogenaurach (DE)
(72) Erfinder: ROSENHEINRICH, Bert, 97456 Dittelbrunn (DE); AUMUELLER, Guenter, 97475 Zeil/Main (DE); HOFMANN, Heinrich, 97422 Schweinfurt (DE); STAHL, Thomas, 97490 Poppenhausen (DE)
(86) Internationale Anmeldenummer: PCT/DE2021/100157
(87) Internationale Veröffentlichungsnummer: WO 2021/197531

(56) Entgegenhaltungen:
- EP-A1- 2 573 412
- EP-B1- 2 573 412
- WO-A1-2018/194025
- DE-A1- 102007 049 982
- DE-A1- 102010 055 405
- DE-B4- 10 331 936
- US-A1- 2015 267 750

## Beschreibung

Die Erfindung betrifft ein für die Verwendung in einem Schienenfahrzeug vorgesehenes Radsatzlager nach dem Oberbegriff des Anspruchs 1. Die Erfindung betrifft weiterhin ein Schienenfahrzeug mit mindestens einem solchen Radsatzlager.

Ein derartiges Radsatzlager ist beispielsweise aus der DE 10 2006 015 289 A1 bekannt. Bei dem bekannten Radsatzlager handelt es sich um ein zweireihiges Kegelrollenlager mit zwei Innenringen und einem einzigen Außenring. Weiter ist bei dem Radsatzlager nach der DE 10 2006 015 289 A1 ein Stützring zur axialen Stützung der Innenringe vorgesehen.

Ein weiteres als Kegelrollenlager ausgebildetes Radsatzlager ist aus der DE 10 2017 119 249 A1 bekannt. In diesem Fall ist eine Generatoreinheit am Radsatzlager vorgesehen. Der Stator der Generatoreinheit ist mit einem Deckel verbunden, welcher das Radsatzlager an einer Stirnseite der Radsatzwelle abdeckt.

Die DE 101 28 861 A1 offenbart ein Radsatzlager, welches als zweireihiges Zylinderrollenlager ausgebildet ist. Zwischen dem Zylinderrollenlager und der Radsatzwelle des Schienenfahrzeugs ist ein Dämpfungselement angeordnet, so dass vom Schienenrad ausgehende Schwingungen das Wälzlager, das heißt Zylinderrollenlager, nur in gedämpfter Form erreichen.

Aus der EP 2 276 658 B1 ist ein Messlager für einen Radsatz eines Schienenfahrzeugs bekannt. Als denkbare Wälzlagertypen sind in der EP 2 276 658 B1 unter anderem Kugellager, Tonnenrollenlager und Nadellager genannt.

Die DE 10 2017 112 338 A1 beschreibt ein zweireihiges Schrägkugellager.

Die DE 10 2007 049 982 A1 offenbart ein Wälzlager mit zwei in O-Anordnung zueinander schräggestellten Schrägkugellagern.

Die DE 10 2013 224 545 A1 beschreibt ein Radlager eines Fahrzeugs mit vier Schrägkugellager-Einheiten.

Die DE 10 2006 025 551 A1 offenbart ein mehrreihiges axial vorgespanntes Schrägkugellager und ein Verfahren zu seiner Herstellung.

Der Erfindung liegt die Aufgabe zugrunde, ein gegenüber dem genannten Stand der Technik weiterentwickeltes Schienenfahrzeug mit mindestens einer Radsatzwelle (2), an welcher ein Radsatzlager angeordnet ist, anzugeben, das sich durch ein besonders günstiges Verhältnis zwischen möglicher Nutzungsdauer und Wartungsaufwand auszeichnet.

Diese Aufgabe wird erfindungsgemäß gelöst durch ein Schienenfahrzeug umfassend mindestens eine Radsatzwelle (2), an welcher mindestens ein Radsatzlager mit den Merkmalen des Anspruchs 1 angeordnet ist. Das Radsatzlager umfasst eine Wälzlageranordnung mit drei Lagerringen, nämlich zwei zur Verbindung mit einer Radsatzwelle vorgesehenen Innenringen und einem zur Verbindung mit einem Gehäuse vorgesehenen Außenring. Die Wälzlageranordnung ist als vierreihiges Schrägkugellager in O-Anordnung ausgebildet, wobei zwei einen ersten Innenring kontaktierende Wälzkörperreihen zur Aufnahme von Axialkräften in einer ersten Richtung und zwei einen zweiten Innenring kontaktierende Wälzkörperreihen zur Aufnahme von Kräften in der entgegengesetzten Axialrichtung vorgesehen sind. Dabei weisen entweder die Innenringe oder der Außenring zur Aufnahme einer jeden Wälzkörperreihe eine einschultrige Wälzkörperlaufbahn auf. Die einschultrige Wälzkörperlaufbahn ist, im Querschnitt entlang einer Mittelachse durch das Radsatzlager gesehen, von einer Radiallinie, die senkrecht zu der Mittelachse und durch einen Wälzkörpermittelpunkt jedes Wälzkörpers einer Wälzkörperreihe verläuft, begrenzt. Die Wälzkörperlaufbahn erstreckt sich ausgehend von der Radiallinie und vom Wälzkörpermittelpunkt in Richtung der Schulter über einen Winkel im Bereich von 35° bis 75° bis zu einem Bezugspunkt mit einem gleichbleibenden Radius. Ab dem Bezugspunkt ist die Wälzkörperlaufbahn einer, an die Wälzkörperlaufbahn im Bezugspunkt angelegten Tangente folgend ausgebildet.

Insbesondere erstreckt sich die Wälzkörperlaufbahn ausgehend von der Radiallinie und vom Wälzkörpermittelpunkt in Richtung der Schulter über einen Winkel im Bereich von 35° bis 50° bis zu dem Bezugspunkt.

Die Wälzkörperlaufbahn ist also, im Querschnitt entlang einer Mittelachse durch das Radsatzlager gesehen, ab dem Bezugspunkt einer, an die Wälzkörperlaufbahn im Bezugspunkt angelegten Tangente folgend ausgebildet. Die Wälzkörperlaufbahn, die die Wälzkörper führt, hat somit im Bereich zwischen der Radiallinie und dem Bezugspunkt einen gleichbleibenden Radius und im äußeren Bereich in Richtung der Schulter keinen gleichbleibenden Radius, sondern einen tangentialen Auslauf folgend der angelegten Tangente. Dieser sorgt dafür, dass bei höheren axialen Lasten, wie sie bei Bahnanwendungen z.B. durch Schienenstöße auftreten können, Kantenspannungen vermieden werden, da die Kontaktellipse nicht auf einen scharfkantigen Übergang "aufläuft", sondern sich im tangentialen Auslauf elliptisch ausbreiten kann. Kantenspannungen können damit vermieden werden. Dadurch wird das Reibverhalten verbessert und die Lebensdauer der Radsatzlagers verlängert. Insbesondere ist der tangentiale Auslauf ab dem Bezugspunkt noch mindestens 2 mm lang, insbesondere 2 bis 10 mm lang.

Mehrreihige Schrägkugellager in O-Anordnung zeichnen sich allgemein dadurch aus, dass die Drucklinien in ihrer Gesamtheit eine geometrische Form ähnlich dem Buchstaben "O" - genauer: in der Art einer Raute - beschreiben. Von mehrreihigen Lagern in O-Anordnung sind ebenfalls mehrreihige Lager in X-Anordnung zu unterscheiden, bei welchen sich die Drucklinien - wie beim Buchstaben "X" - schneiden. Im vorliegenden Fall, das heißt bei der vierreihigen Wälzlageranordnung, sind durch die Drucklinien des Lagers zwei ineinander geschachtelte Rauten gebildet.

Es wird von der Überlegung ausgegangen, dass bei Radsatzlagern für Schienenfahrzeuge lange Wartungsintervalle, beispielsweise ein wartungsfreier Betrieb über drei Millionen Kilometer, gefordert werden. Beachtenswert ist unter anderem die Fettgebrauchsdauer, insbesondere bei im langfristigen Trend bei Schienenfahrzeugen steigenden Drehzahlgrenzen. Die Fettgebrauchsdauer ist unter anderem abhängig von der im Radsatzlager herrschenden Temperatur, wobei diese maßgeblich durch die Reibung im Lager beeinflusst wird.

Ausgehend von diesen Überlegungen wird mit dem vierreihigen Schrägkugellager des Radsatzlagers des Schienenfahrzeugs nach Anspruch 1 ein Wälzlagertyp bereitgestellt, der sich im Vergleich zu Zylinderrollenlagern und Kegelrollenlagern durch eine besonders niedrige Reibung auszeichnet. Überraschenderweise hat sich gezeigt, dass trotz der bauartbedingt fehlenden Linienkontakte, wie sie bei Kegelrollenlagern und Zylinderrollenlagern gegeben sind, eine für die Verwendung in Schienenfahrzeugen ausreichende Tragfähigkeit unter Nutzung des zur Verfügung stehenden Bauraums erzielbar ist. Zwischen den Innenringen des Radsatzlagers befindet sich in bevorzugter Ausgestaltung kein Zwischenring. Vielmehr stoßen die Innenringe vorzugsweise direkt aneinander.

Was vierreihige Schrägkugellager in O-Anordnung, die auch als Twin-Tandem-Lager bezeichnet werden, betrifft, wird zum technischen Hintergrund auf die Dokumente DE 84 05 082 U1, DE 103 31 936 B4, DE 198 39 481 A1 und DE 10 2017 112 338 A1 hingewiesen. In allen genannten Fällen handelt es sich allerdings um Lager für Kraftfahrzeuge.

Die beiden Wälzkörperreihen sind mit besonders geringem, insbesondere fehlendem Axialspiel gebildet. Das heißt die äußeren Wälzkörperreihen sind vorzugsweise durch Wälzkörper, das heißt Kugeln, gebildet, deren Durchmesser um mindestens 5 % und maximal 25% größer, bevorzugt 12 bis 17 % größer, als der Durchmesser der Wälzkörper der beiden inneren Wälzkörperreihen ist. Diese Größenverhältnisse tragen zu einer gleichmäßigen Pressung auf niedrigem Niveau bei, wobei im bestimmungsgemäßen Betrieb, das heißt bei Verwendung in einem Schienenfahrzeug, ein gleichmäßiges Tragbild gegeben ist.

Auf die Verwendung in Schienenfahrzeugen abgestimmt, ist das Radsatzlager hauptsächlich zur Aufnahme von Radialkräften und im untergeordneten Maße zur Aufnahme von Axialkräften konzipiert. Hierbei können Radial- und Axialkräfte von sämtlichen Wälzkörperreihen aufgenommen werden. In bevorzugter Ausgestaltung weicht der Druckwinkel der beiden äußeren Wälzkörperreihen vom Druckwinkel der beiden inneren Wälzkörperreihen um nicht mehr als 6° ab. Damit ist durch jede Wälzkörperreihe näherungsweise im gleichen Verhältnis eine Abstützung in Radialrichtung und eine Abstützung in Axialrichtung möglich. Vorzugsweise beträgt der Druckwinkel einer jeden Wälzkörperreihe mindestens 24° und höchstens 36°, zum Beispiel einheitlich 30°.

In beanspruchungsgerechter und montagefreundlicher Weise sind vorzugsweise durch die Innenringe rillenförmige Wälzkörperlaufbahnen gebildet, wogegen die Wälzkörperlaufbahnen des Außenrings einschultrig ausgebildet sind und damit jeweils nur in einer einzigen Axialrichtung eine Abstützung bieten. In der entgegengesetzten Axialrichtung geht die Laufbahn des Außenrings dagegen in eine zylindrische Innenumfangsfläche des Außenrings über, was einen tangentialen Auslauf der Wälzkörperlaufbahn bedeutet. Aber auch eine Ausgestaltung ist möglich, bei welcher der Außenring rillenförmige Wälzkörperlaufbahnen bildet, wogegen die Wälzkörperlaufbahnen der Innenringe einschultrig ausgebildet sind. Ebenso sind Ausführungsformen realisierbar, in welchen der Auslauf der Wälzkörperlaufbahn, das heißt derjenige Oberflächenabschnitt, welcher der Schulter der Laufbahn gegenüber liegt, eine konische Oberfläche beschreibt, wobei sich der entsprechende Konus in Richtung zur der Wälzkörperlaufbahn nächstgelegenen Stirnseite des Außenrings aufweitet.

Im Sinne einer Maximierung der Lebensdauer hat es sich als vorteilhaft herausgestellt, wenn das Axialspiel der beiden äußeren Wälzkörperreihen geringer als das Axialspiel der beiden inneren Wälzkörperreihen des Twin-Tandem-Lagers ist. Insbesondere ist an den beiden äußeren Wälzkörperreihen kein Axialspiel gegeben, wogegen das Axialspiel an den beiden inneren Wälzkörperreihen mehr als 10 µm beträgt, wobei von einer Temperatur des Radsatzlagers 20°C ausgegangen wird und weiterhin das Radsatzlager noch nicht am Einsatzort auf einer Radsatzwelle montiert ist. Durch das von den inneren Wälzkörperreihen zu den äußeren Wälzkörperreihen abnehmende Axialspiel ist die Wälzkörperanordnung besonders auch für die Aufnahme von Kippbelastungen geeignet.

Im betriebswarmen Zustand des Radsatzlagers, das heißt bei Temperaturen größer 50°C, wie sie üblicherweise im Betrieb des Radsatzlagers im montierten Zustand auf einer Radsatzwelle auftreten, ist ein Axialspiel der äußeren Wälzkörperreihe und der inneren Wälzkörperreihe gleich 0, so dass sich eine gleichmäßige Belastung aller Wälzkörperreihen ergibt.

Die Wälzkörper einer jeden Wälzkörperreihe können in an sich bekannter Weise jeweils durch einen Käfig geführt sein. Ebenso kann die gesamte Wälzlageranordnung in an sich bekannter Weise abgedichtet sein, wobei vorzugsweise reibungsarme Dichtungen zum Einsatz kommen. Als Schmiermittel wird vorzugsweise ein Fett verwendet. Dank der Punktkontakte zwischen den Wälzkörpern und den Lagerringen tritt beim Betrieb des Radsatzlagers lediglich eine moderate Temperaturerhöhung auf, was ein geringe Fettbeanspruchung bedeutet.

Eine signifikante Rolle spielt auch die durch die Punktkontakte im Vergleich zu Linienkontakten verringerte Scherbeanspruchung des Schmiermittels, was ebenfalls der Fettgebrauchsdauer zu Gute kommt. In diesem Zusammenhang wird ergänzend auf die Norm DIN 51825 "Schmierstoffe - Schmierfette K - Einteilung und Anforderungen" hingewiesen, die für Schmierfette zur Schmierung von Wälzlagern, Gleitlagern und Gleitflächen gilt.

Nachfolgend wird ein Ausführungsbeispiel der Erfindung anhand einer Zeichnung näher erläutert. Hierin zeigen:
- Fig. 1: ein Radsatzlager in einer Schnittdarstellung,
- Fig. 2: ein Detail des Radsatzlagers.

Ein insgesamt mit 1 bezeichnetes Radsatzlager dient der Lagerung einer Radsatzwelle 2 in einer tragenden Konstruktion 3 eines nicht gesondert dargestellten Schienenfahrzeugs. Das Radsatzlager 1 umfasst eine Wälzlageranordnung 7 mit zwei Innenringen 4, 8 und einem einzigen Außenring 9. Eine Endkappe 11, die mit Schrauben 12 stirnseitig an die Radsatzwelle 2 angeschraubt ist, stützt die gesamte Wälzlageranordnung 7 in einer Axialrichtung ab. Die Schrauben 12 sind durch Bohrungen 14 in der Endkappe 11 gesteckt. Mit 13 sind Dichtungen zur beidseitigen Abdichtung der Wälzlageranordnung 7 bezeichnet. Die Wälzlageranordnung 7 ist mit einem Fett als Schmiermittel geschmiert.

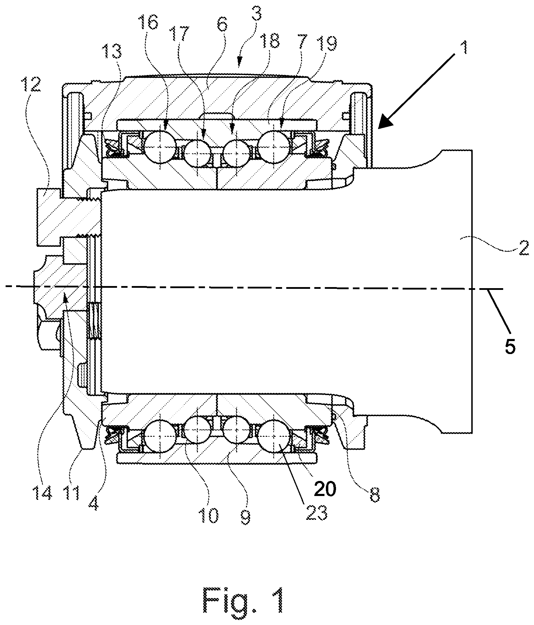

Die Wälzlageranordnung 7 ist als vierreihiges Schrägkugellager in Form eines Twin-Tandem-Lagers aufgebaut. Die einzelnen Wälzkörperreihen sind mit 16, 17, 18, 19 bezeichnet. Hierbei rollen auf dem in der Anordnung nach Figur 1 links befindlichen Innenring 4 die Wälzkörperreihen 16, 17 und auf dem rechts befindlichen Lagerrinnenring 8 die Wälzkörperreihen 18, 19 ab. Die Wälzkörperlaufbahnen der Innenringe 4, 8 sind mit 21, die insgesamt vier Wälzkörperlaufbahnen des Außenrings 9 mit 22 bezeichnet. Die Wälzkörper 10, 23 einer jeder Wälzkörperreihe 16, 17, 18, 19 sind in einem Käfig 20 geführt.

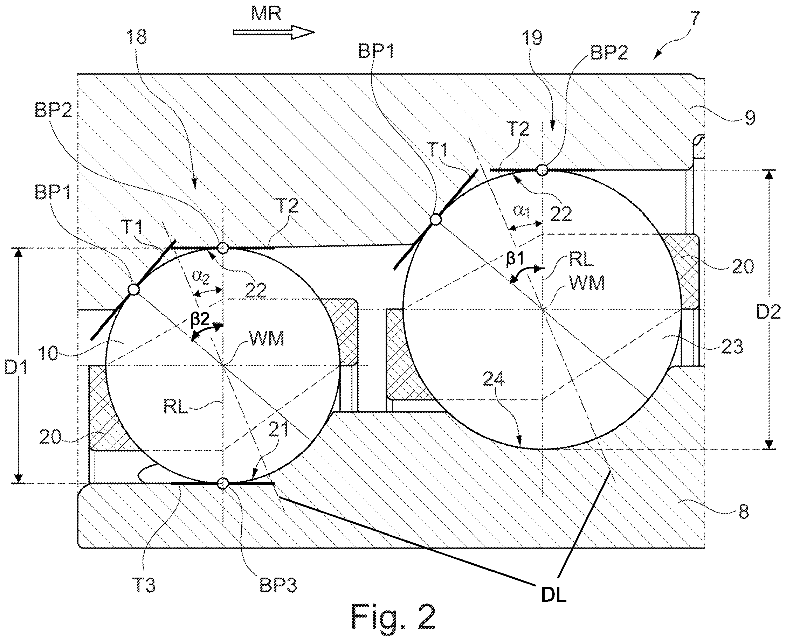

Durch die Wälzkörperreihen 16, 17 ist eine Abstützung der Radsatzwelle 2 gegenüber dem Lagergehäuse 6 in einer ersten Axialrichtung gegeben. Die Wälzkörperreihen 18, 19 dienen der Abstützung in der entgegengesetzten Axialrichtung. Die gesamte Wälzlageranordnung 7 ist spiegelsymmetrisch zu einer zwischen die Lagerrinnenringe 4, 8 gelegten Ebene ausgebildet. Wie insbesondere aus Figur 2 hervorgeht, ist der mit D1 bezeichnete Durchmesser der Wälzkörper 10 der beiden inneren Wälzkörperreihen 17, 18 geringer als der mit D2 bezeichnete Durchmesser der Wälzkörper 23 der beiden äußeren Wälzkörperreihen 16, 19. Ein durch sämtliche Wälzkörpermittelpunkte WM einer Wälzkörperreihe 16, 17, 18, 19 gelegter Kreis stellt definitionsgemäß den Teilkreis der betreffenden Wälzkörperreihe 16, 17, 18, 19 dar. Der Teilkreisdurchmesser der inneren Wälzkörperreihen 17, 18 ist geringer als der Teilkreisdurchmesser der äußeren Wälzkörperreihen 16, 19.

Die insgesamt vier durch die Lagerinnenringe 4, 8 bereitgestellten Laufbahnen 21 sind jeweils rillenförmig ausgebildet. Im Unterschied hierzu sind die Wälzkörperlaufbahnen 22 des Außenrings 9 jeweils als einschultrige Laufbahnen, welche die Form einer halben Rille haben, ausgebildet. In Figur 2 sind an die Wälzkörperlaufbahnen 22 verschiedene Tangenten T1, T2 angelegt, die jeweils durch einen Bezugspunkt BP1, BP2 gelegt sind. Der Bezugspunkt BP2 liegt in jedem Fall auf einer Radiallinie RL, die durch den Wälzkörpermittelpunkt WM gelegt ist und in einer Ebene liegt, zu welcher die Mittelachse 5 der Wälzlageranordnung 7 eine Flächennormale darstellt. Die Tangente T2, auf welcher der Bezugspunkt BP2 liegt, ist parallel zur Rotationsachse der Wälzlageranordnung 7, das heißt zur Mittelachse 5 der Radsatzwelle 2, ausgerichtet. Die einschultrige Form der Wälzkörperlaufbahn 22 drückt sich dadurch aus, das sämtliche Tangenten, die an die Laufbahn 22 gelegt werden können, in ein und demselben Sinne gegenüber der Mittelachse 5 schräggestellt sind oder im Extremfall, was bei der Tangente T2 der Fall ist, parallel von der Mittelachse 5 beabstandet sind. Die Tangente T1, auf welcher der Bezugspunkt BP1 liegt, befindet sich nahe der Schulter. Ausgehend von der Radiallinie RL und dem Wälzkörpermittelpunkt WM liegt der Bezugspunkt BP1 hier auf einer Linie, die mit der Radiallinie RL einen Winkel β1, β2 von etwa 48° einschließt.

Die Wälzkörperlaufbahn 22 ist ab dem Bezugspunkt BP1 einer, an die Wälzkörperlaufbahn 22 im Bezugspunkt BP1 angelegten Tangente T1 folgend ausgebildet.

Die Wälzkörperlaufbahn 22, die die Wälzkörper 10, 23 führt, hat im äußeren Bereich in Richtung der Schulter keinen gleichbleibenden Radius, sondern einen tangentialen Auslauf folgend der Tangente T1. Dieser sorgt dafür, dass bei höheren axialen Lasten, wie sie bei Bahnanwendungen z.B. durch Schienenstöße auftreten können, Kantenspannungen vermieden werden, da die Kontaktellipse nicht auf einen scharfkantigen Übergang "aufläuft", sondern sich im tangentialen Auslauf elliptisch ausbreiten kann. Auf der anderen Seite der Wälzkörperlaufbahn 22 ist die Tangente T2 vorgesehen, die den Verlauf der Wälzkörperlaufbahn 22 vorgibt und die ebenfalls eine ungehinderte Ausbreitung der Kontaktellipse ermöglichen soll. Kantenspannungen können damit vermieden werden. Dadurch wird das Reibverhalten verbessert und die Lebensdauer der Radsatzlagers verlängert.

Die Wälzlagerreihen 17, 18 liegen im Bereich der Innenringe 4, 8 ebenfalls in einschultrigen Wälzlagerlaufbahnen 21. Im Bezugspunkt BP3 ist eine Tangente T3 angelegt, die den Verlauf der Wälzkörperlaufbahn 21 vorgibt und die ebenfalls eine ungehinderte Ausbreitung der Kontaktellipse ermöglichen soll. Lediglich die die Wälzlagerreihen 16, 19 liegen im Bereich der Innenringe 4, 8 in zweischultrigen Wälzlagerlaufbahnen 24.

Mit DL bezeichnete Drucklinien sind gemäß üblicher Definition durch die Wälzkörpermittelpunkte WM und die Berührpunkte an den Lagerringen 4, 8, 9 gelegt. Die mit α1, α2 bezeichneten Druckwinkel, welche an den äußeren Wälzkörperreihen 16, 19 beziehungsweise an der inneren Wälzkörperreihen 17, 18 gegeben sind, betragen im Ausführungsbeispiel einheitlich 30°. Die mit MR bezeichnete Montagerichtung gibt an, in welcher Richtung bei der Montage der Wälzlageranordnung 7 der Außenring 9 gegenüber dem Innenring 8 zu verschieben ist. Nach erfolgter Montage sind die Wälzkörper 23 der äußeren Wälzkörperreihen 16, 19 ohne Spiel in Axialrichtung zwischen dem Innenring 4, 8 und dem Außenring 9 angeordnet. Dagegen ist bei den inneren Wälzkörperreihen 17, 18 ein ebenfalls auf die Axialrichtung bezogenes Spiel von mehr als 10 µm gegeben.

### Bezugszeichenliste

- 1: Radsatzlager
- 2: Radsatzwelle
- 3: tragende Konstruktion
- 4: Lagerinnenring
- 5: Mittelachse
- 6: Lagergehäuse
- 7: Wälzlageranordnung, vierreihiges Schrägkugellager
- 8: Lagerinnenring
- 9: Lageraußenring
- 10: Wälzkörper
- 11: Endkappe
- 12: Schraube
- 13: Dichtung
- 14: Bohrung in der Endkappe
- 15 16: Wälzkörperreihe
- 17: Wälzkörperreihe
- 18: Wälzkörperreihe
- 19: Wälzkörperreihe
- 20: Käfig
- 21: Laufbahn des Innenrings
- 22: Laufbahn des Außenrings
- 23: Wälzkörper
- 24: Laufbahn des Innenrings
- α1, α2: Druckwinkel
- β1, β2: Winkel
- BP1, BP2, BP3: Bezugspunkt
- D1, D2: Wälzkörperdurchmesser
- DL: Drucklinie
- MR: Montagerichtung
- RL: Radiallinie
- T1, T2, T3: Tangente
- WM: Wälzkörperm ittelpunkt

## Patentansprüche

1. Schienenfahrzeug umfassend mindestens eine Radsatzwelle (2), an welcher mindestens ein Radsatzlager (1) angeordnet ist, umfassend eine Wälzlageranordnung (7) mit drei Lagerringen (4, 8, 9), nämlich zwei zur Verbindung mit einer Radsatzwelle (2) vorgesehenen Innenringen (4, 8) und einem zur Verbindung mit einem Gehäuse (6) vorgesehenen Außenring (9), wobei die Wälzlageranordnung (7) als vierreihiges Schrägkugellager in O-Anordnung ausgebildet ist, wobei zwei einen ersten Innenring (4) kontaktierende Wälzkörperreihen (16, 17) zur Aufnahme von Axialkräften in einer ersten Richtung und zwei einen zweiten Innenring (8) kontaktierende Wälzkörperreihen (18, 19) zur Aufnahme von Kräften in der entgegengesetzten Axialrichtung vorgesehen sind, **dadurch gekennzeichnet, dass**
entweder die Innenringe (4, 8) oder der Außenring (9) zur Aufnahme einer jeden Wälzkörperreihe (16, 17, 18, 19) eine einschultrige Wälzkörperlaufbahn (22) aufweisend ausgebildet ist/sind, wobei die einschultrige Wälzkörperlaufbahn (22), im Querschnitt entlang einer Mittelachse (5) durch das Radsatzlager (1) gesehen, von einer Radiallinie (RL), die senkrecht zu der Mittelachse (5) durch einen Wälzkörpermittelpunkt (WM) jedes Wälzkörpers (10, 23) einer Wälzkörperreihe (16, 17, 18, 19) verläuft, begrenzt ist, wobei die Wälzkörperlaufbahn (22) ausgehend von der Radiallinie (RL) und vom Wälzkörpermittelpunkt (WM) sich in Richtung der Schulter über einen Winkel (β1, β2) im Bereich von 35 bis 75° bis zu einem Bezugspunkt (BP1) mit gleichbleibendem Radius erstreckt, und dass die Wälzkörperlaufbahn (22) ab dem Bezugspunkt (BP1) einer, an die Wälzkörperlaufbahn (22) im Bezugspunkt (BP1) angelegten Tangente (T1) folgend ausgebildet ist.

2. Schienenfahrzeug nach Anspruch 1, **dadurch gekennzeichnet, dass** der Durchmesser (D2) der Wälzkörper (23) der beiden äußeren Wälzkörperreihen (16, 19) um mindestens 5% und maximal 25% größer als der Durchmesser (D1) der Wälzkörper (10) der beiden inneren Wälzkörperreihen (17, 18) ist.

3. Schienenfahrzeug nach Anspruch 1 oder Anspruch 2, **dadurch gekennzeichnet, dass** der Druckwinkel (α2) der beiden äußeren Wälzkörperreihen (16, 19) vom Druckwinkel (α1) der beiden inneren Wälzkörperreihen (17, 18) um nicht mehr als 6° abweicht.

4. Schienenfahrzeug nach Anspruch 3 **dadurch gekennzeichnet, dass** der Druckwinkel (α1, α2) einer jeden Wälzkörperreihe (16, 17, 18, 19) mindestens 24° und höchstens 36° beträgt.

5. Schienenfahrzeug nach Anspruch 4, **dadurch gekennzeichnet, dass** sämtliche Wälzkörperreihen (16, 17, 18, 19) der Wälzlageranordnung (7) einen einheitlichen Druckwinkel (α1, α2) von 30° aufweisen.

6. Schienenfahrzeug Radsatelager nach einem der Ansprüche 1 bis 5, **dadurch gekennzeichnet, dass** der Außenring (9) an jeder Wälzkörperreihe (16, 17, 18, 19) die einschultrige Wälzkörperlaufbahn (22) aufweist.

7. Schienenfahrzeug nach einem der Ansprüche 1 bis 6, **dadurch gekennzeichnet, dass** das Axialspiel der beiden äußeren Wälzkörperreihen (16, 19) geringer als das Axialspiel der beiden inneren Wälzkörperreihen (17, 18) ist.

8. Schienenfahrzeug nach Anspruch 7, **dadurch gekennzeichnet, dass** an den beiden äußeren Wälzkörperreihen (16, 19) kein Axialspiel gegeben ist.

9. Schienenfahrzeug nach Anspruch 7, **dadurch gekennzeichnet, dass** das Axialspiel an den beiden inneren Wälzkörperreihen (17, 18) mehr als 10 µm beträgt.

## Claims

1. A rail vehicle comprising at least one wheelset shaft (2) on which at least one wheelset bearing (1) is arranged, comprising a rolling bearing arrangement (7) with three bearing rings (4, 8, 9), namely two inner rings (4, 8) provided for connection to a wheelset shaft (2) and one outer ring (9) provided for connection to a housing (6), wherein the rolling bearing arrangement (7) is designed as a four-row angular contact ball bearing in an O arrangement, wherein two rows of rolling elements (16, 17) contacting a first inner ring (4) are provided for absorbing axial forces in a first direction and two rows of rolling elements (18, 19) contacting a second inner ring (8) are provided for absorbing forces in the opposite axial direction,
**characterized in that**
either the inner rings (4, 8) or the outer ring (9) is/are designed to have a single-shoulder rolling element raceway (22) for receiving each row of rolling elements (16, 17, 18, 19), wherein the single-shoulder rolling element raceway (22), as seen in cross-section along a central axis (5) through the wheelset bearing (1), is delimited by a radial line (RL) which runs perpendicular to the central axis (5) through a rolling element center (WM) of each rolling element (10, 23) of a row of rolling elements (16, 17, 18, 19), wherein the rolling element raceway (22), starting from the radial line (RL) and from the rolling element center (WM), extends in the direction of the shoulder over an angle (β1, β2) in the range from 35 to 75° to a reference point (BP1) with a constant radius and that the rolling element raceway (22) is formed from the reference point (BP1) following a tangent (T1) applied to the rolling element raceway (22) at the reference point (BP1).

2. The rail vehicle according to claim 1, **characterized in that** the diameter (D2) of the rolling elements (23) of the two outer rows of rolling elements (16, 19) is at least 5% and at most 25% larger than the diameter (D1) of the rolling elements (10) of the two inner rows of rolling elements (17, 18).

3. The rail vehicle according to claim 1 or claim 2, **characterized in that** the contact angle (α2) of the two outer rows of rolling elements (16, 19) deviates from the contact angle (α1) of the two inner rows of rolling elements (17, 18) by no more than 6°.

4. The rail vehicle according to claim 3, **characterized in that** the contact angle (α1, α2) of each row of rolling elements (16, 17, 18, 19) is at least 24° and at most 36°.

5. The rail vehicle according to claim 4, **characterized in that** all rows of rolling elements (16, 17, 18, 19) of the rolling bearing arrangement (7) have a uniform contact angle (α1, α2) of 30°.

6. The rail vehicle according to any one of claims 1 to 5, **characterized in that** the outer ring (9) has the single shoulder rolling element raceway (22) on each row of rolling elements (16, 17, 18, 19).

7. The rail vehicle according to any one of claims 1 to 6, **characterized in that** the axial play of the two outer rows of rolling elements (16, 19) is less than the axial play of the two inner rows of rolling elements (17, 18).

8. The rail vehicle according to claim 7, **characterized in that** there is no axial play on the two outer rows of rolling elements (16, 19).

9. The rail vehicle according to claim 7, **characterized in that** the axial play on the two inner rows of rolling elements (17, 18) is more than 10 µm.

## Revendications

1. Véhicule ferroviaire comprenant au moins un arbre d'essieu monté (2), sur lequel est agencé au moins un palier d'essieu monté (1), comprenant un ensemble de paliers à roulements (7) comportant trois bagues de palier (4, 8, 9), à savoir deux bagues intérieures (4, 8) prévues pour le raccordement à un arbre d'essieu monté (2) et une bague extérieure (9) prévue pour le raccordement à un boîtier (6), dans lequel l'ensemble de paliers à roulements (7) est conçu comme un palier à billes à contact oblique à quatre rangées dans un agencement en O, dans lequel deux rangées d'éléments roulants (16, 17) en contact avec une première bague intérieure (4) sont prévus pour absorber les forces axiales dans une première direction et deux rangées d'éléments roulants (18, 19) en contact avec une seconde bague intérieure (8) sont prévus pour absorber les forces dans la direction axiale opposée,
**caractérisé en ce que**
soit les bagues intérieures (4, 8), soit la bague extérieure (9) sont conçues pour recevoir chaque rangée d'éléments roulants (16, 17, 18, 19) en présentant un chemin de roulement (22) pour éléments roulants à un épaulement, dans lequel le chemin de roulement (22) pour éléments roulants à un épaulement, en coupe transversale vu le long d'un axe central (5) à travers le palier d'essieu monté (1), est délimité par une ligne radiale (RL) perpendiculaire à l'axe central (5) passant par un centre d'élément roulant (WM) de chaque élément roulant (10, 23) d'une rangée d'éléments roulants (16, 17, 18, 19), dans lequel le chemin de roulement (22) pour éléments roulants partant de la ligne radiale (RL) et du centre d'élément roulant (WM) s'étend en direction de l'épaulement sur un angle (131,132) compris dans la plage de 35 à 75° jusqu'à un point de référence (BP1) avec un rayon constant, et **en ce que** le chemin de roulement (22) pour éléments roulants est conçu à partir du point de référence (BP1) en suivant une tangente (T1) appliquée au chemin de roulement (22) pour éléments roulants au point de référence (BP1).

2. Véhicule ferroviaire selon la revendication 1, **caractérisé en ce que** le diamètre (D2) des éléments roulants (23) des deux rangées extérieures d'éléments roulants (16, 19) est au moins 5 % et au maximum 25 % plus grand que le diamètre (D1) des éléments roulants (10) des deux rangées intérieures d'éléments roulants (17, 18).

3. Véhicule ferroviaire selon la revendication 1 ou la revendication 2, **caractérisé en ce que** l'angle de pression (α2) des deux rangées extérieures d'éléments roulants (16, 19) ne s'écarte pas de plus de 6° de l'angle de pression (α1) des deux rangées intérieures d'éléments roulants (17, 18).

4. Véhicule ferroviaire selon la revendication 3, **caractérisé en ce que** l'angle de pression (α1, α2) de chaque rangée d'éléments roulants (16, 17, 18, 19) est d'au moins 24° et d'au plus 36°.

5. Véhicule ferroviaire selon la revendication 4, **caractérisé en ce que** toutes les rangées d'éléments roulants (16, 17, 18, 19) de l'ensemble de paliers à roulements (7) présentent un angle de pression (α1, α2) uniforme de 30°.

6. Véhicule ferroviaire selon l'une quelconque des revendications 1 à 5, **caractérisé en ce que** la bague extérieure (9) présente sur chaque rangée d'éléments roulants (16, 17, 18, 19) le chemin de roulement (22) pour éléments roulants à un épaulement.

7. Véhicule ferroviaire selon l'une quelconque des revendications 1 à 6, **caractérisé en ce que** le jeu axial des deux rangées extérieures d'éléments roulants (16, 19) est inférieur au jeu axial des deux rangées intérieures d'éléments roulants (17, 18).

8. Véhicule ferroviaire selon la revendication 7, **caractérisé en ce qu'**il n'y a pas de jeu axial sur les deux rangées extérieures d'éléments roulants (16, 19).

9. Véhicule ferroviaire selon la revendication 7, **caractérisé en ce que** le jeu axial sur les deux rangées intérieures d'éléments roulants (17, 18) est supérieur à 10 µm.
